# EUROPÄISCHE PATENTSCHRIFT

(11) **EP 1 403 619 B1**
(45) Veröffentlichungstag und Bekanntmachung des Hinweises auf die Patenterteilung: **19.12.2007**
(21) Anmeldenummer: 03102409.4
(22) Anmeldetag: 01.08.2003
(51) Int. Cl.: G01C 21/36, G06F 3/023

(54) **Eingabevorrichtung**
Input device
Dispositif de saisie

(30) Priorität: 27.09.2002 DE 10245333
(43) Veröffentlichungstag der Anmeldung: 31.03.2004
(73) Patentinhaber: ROBERT BOSCH GMBH, 70442 Stuttgart (DE)
(72) Erfinder: Neukam, Frank, 70825, Korntal (DE)

(56) Entgegenhaltungen:
- EP-A- 0 408 409
- EP-A- 0 704 676
- DE-A- 3 842 414
- DE-A- 4 443 912

## Beschreibung

### Stand der Technik

Die Erfindung geht aus von einer Eingabevorrichtung nach der Gattung des Hauptanspruchs. Es sind schon Bedienelemente bekannt, die zur Funktionsauswahl und zur Veränderung von Parameterwerten dienen, indem sie mit einer Darstellung in einer Anzeige zusammenwirken. Hierzu ist es bekannt, in der Anzeige Schalter und Schaltergruppen, z.B. Drucktasten oder Bestätigungsfelder, darzustellen. Derartige Schalter dienen im allgemeinen nur zur Bestätigung einer Eingabe und können im allgemeinen maximal zwischen zwei Zuständen geschaltet werden. Ferner ist auch eine Listendarstellung bekannt, bei der aus einer Vielzahl einzelner Möglichkeiten ein bestimmter Parameter ausgewählt wird. Die einzelnen Listeneinträge dienen dazu, über die zur Verfügung stehende Auswahl zu informieren. Sowohl bei der Listenauswahl als auch bei der Schaltereinstellung sind stets genau definierte Zustände, nämlich "ausgewählt" oder "nicht ausgewählt", gegeben. Viele Geräte erfordern und ermöglichen jedoch auch eine Einstellung über einen kontinuierlichen Wertebereich, die bei herkömmlichen Bedienelemente im allgemeinen durch Potentiometer realisiert wird, bei denen eine Bedienung linear zu einer Parameteränderung ist.

Die Auswahl mittels einem Schalter ist sehr effizient und intuitiv bedienbar, da für eine Werteänderung im allgemeinen eine einzige Betätigung ausreichend ist. Diese Auswahl ist im allgemeinen eine bloße Auswahl des jeweiligen Bedienelements in der Anzeige mit einem Steuerungsgerät, das auf eine in der Anzeige bewegbare Anzeigemarke wirkt. Bei einer Listenauswahl sind im allgemeinen zwei Aktionen erforderlich, wobei zuerst eine Anwahl eines gewünschten Listeneintrags und anschließend die entsprechende Auswahl erfolgt. Eine solche Eingabevorrichtung ist z.B. aus der EP 366 132 A2 bekannt, bei der mittels einem Drehgeber zunächst ein Menüpunkt ausgewählt und durch eine axiale Betätigung des Drehgebers anschließend bestätigt wird. Ferner ist es auch bekannt, die Anzeige von kontinuierlich einstellbaren Größen mittels einer grafischen Benutzeroberfläche durchzuführen. Eine Betätigung folgt dabei im Allgemeinen in der Weise, dass ein Positionszeiger, der für einen Parameterwert steht, mittels der Anzeigemarke ausgewählt wird. Hierzu wird eine Festhaltetaste betätigt, und die Anzeigemarke wird mittels dem ersten Bedienelement verschoben. Die Festhaltetaste muss während dieser Zeit gehalten werden. Mittels der Verschiebung der Anzeigemarke durch das Bedienelement wird der Parameter verändert. Nachdem die Festhaltetaste losgelassen wird, ist der neue Parameterwert eingestellt. Diese Bedienweise ist jedoch nicht intuitiv erfassbar, da sie sich wesentlich von einer herkömmlichen Potentiometersteuerung, die im Allgemeinen eine reine Drehbewegung des zugehörigen Bedienknopfes erfordert, unterscheidet. Zudem können kleine Parameteränderungen gegebenenfalls schwierig durchgeführt werden, da das Bedienelement zur Steuerung der Anzeigemarke in diesem Fall sehr genau geführt werden muss. Ferner ist eine haptische Rückkopplung entweder nicht vorgesehen oder nur aufwendig realisierbar.

Aus der EP 0 408 409 A2 ist ein Computersystem für ein Fahrzeug bekannt, bei dem über ein Drehelement verschiedene Informationen in einer Anzeige ausgewählt werden können. Durch einen gesonderten Schalter kann die ausgewählte Anzeige auf Null zurückgesetzt werden.

Aus der EP 0 704 676 A1 ist ein System zur Anzeige von Informationen in einem Auto bekannt, bei dem in einer Anzeigeeinrichtung eine Zone angegeben wird, die vergrößert werden soll. Hierzu wird ein Zonenzeiger an beliebiger Stelle auf einer auf der Anzeigeeinrichtung dargestellten Karte positioniert, um anschließend einen Vergrößerungsvorgang der Zone auszulösen. Ferner ist eine Einrichtung zum Einstellen des Anzeigemaßstabs der ausgewählten Zone vorgesehen.

### Vorteile der Erfindung

Die erfindungsgemäße Eingabevorrichtung mit den Merkmalen des unabhängigen Anspruch 1 hat dem gegenüber den Vorteil, dass ein Parameter, der verändert werden soll, in der der Eingabevorrichtung zugeordneten Anzeige einfach ausgewählt wird und mit Hilfe eines zweiten Bedienelements, das nicht die Anzeigemarke steuert, sondern für die Parameterveränderung vorgesehen ist, effizient und intuitiv verändert werden kann. Anstelle einer Parameteränderung mit zahlreichen Bedienschritten, nämlich auswählen, Festhaltetaste betätigen, Anzeigemarke bewegen, Festhaltetaste loslassen, ist nur noch ein Bedienschritt erforderlich, nämliche eine Betätigung des zweiten Bedienelements, sofern nur die Anzeigemarke an der richtigen Stelle der Anzeigefläche positioniert ist. Damit entspricht eine Bedienung zur Parameteränderung der Erfahrung der Betätigung realer Bedienelemente, bei der ebenfalls keine zusätzliche Taste gedrückt werden muss, sondern einfach das gewünschte Element betätigt wird. Der Benutzer erhält somit eine direkte Rückwirkung seiner Eingabe zur Steuerung des elektrischen Geräts und kann dabei auch kleinschrittige Änderungen vornehmen. Zudem stört das Eingabeverfahren herkömmliche Eingabeverfahren nicht, so dass eine Kompatibilität gegeben ist, sollte der Benutzer zusätzlich ein anderes Eingabeverfahren wünschen.

Durch die in den abhängigen Ansprüchen aufgeführten Maßnahmen sind vorteilhafte Weiterbildungen und Verbesserungen der im Hauptanspruch angegebenen Eingabevorrichtung möglich. Besonders vorteilhaft ist, die zweite Bedieneinheit innerhalb der ersten Bedieneinheit anzuordnen, so dass ein Benutzer bei einer Auswahl der Parameteränderung die Position seiner Hand nicht ändern muss und die zweite Bedieneinheit unmittelbar erfassen kann.

Ferner ist vorteilhaft, die zweite Bedieneinheit als ein Drehrad auszuführen, da mittels einem Drehrad, insbesondere auch durch Vorsehen einer haptischen Rückkopplung, z.B. verschiedener Raststufen, eine leichte Bedienung möglich ist. Zudem ermöglicht es ein Drehrad, bei jedem Aufruf einer Parameterveränderung die Ausgangsstellung des Drehrades als Nullpunkt zu definieren, so dass ausgehend von diesem Nullpunkt eine Veränderung des Parameters in beide Richtungen möglich ist. Besonders vorteilhaft ist, die Bewegung des Drehrades elektronisch zu erfassen, so dass im Gegensatz zu einer Potentiometeranordnung eine anschlagfreie Betätigung und eine damit verbundene Parameterwahl in beide Drehrichtungen des Drehrades möglich ist.

Ferner ist vorteilhaft, den eingestellten Parameterwert automatisch zu speichern, nachdem die Anzeigemarke den dem Parameter zugeordneten Bereich verlassen hat, so dass weitere Speicherschritte durch den Benutzer nicht erforderlich sind. Der Parameter wird vielmehr automatisch übernommen.

Erfindungsgemäss sind in der Anzeigefläche bestimmte Bereichvorgesehen, die dem Parameter direkt zugeordnet sind und durch Symbole und/oder Beschriftung auf eine Einstellung des Parameters hindeuten. Bei einer Positionierung der Anzeigemarke über diesem Bereich erfolgt eine automatische Zuordnung der zweiten Bedieneinheit zu dem diesem Bereich zugeordneten Parameter. Eine weitere, durch den Benutzer vorzusehende Auswahl, kann hierdurch vermieden werden. Ferner ist vorteilhaft, um das dem Parameter zugeordnete Feld herum einen Fangbereich vorzusehen, so dass bei einer Positionierung der Anzeigemarke in diesem Fangbereich ebenfalls eine Zuordnung des zweiten Bedienelements zu einer Veränderung des dem Feld zugewiesenen Parameters erfolgt. Hierdurch wird die Benutzung erleichtert, da der Benutzer die Anzeigemarke nicht genau in das Feld positionieren muss, sondern bereits in einer Umgebung des Feldes eine Zuordnung zu dem Parameter erreicht.

Ferner ist vorteilhaft, das Verhältnis zwischen einer Betätigung des zweiten Bedienelements und einer Veränderung des Parameters anzupassen. Im allgemeinen wird eine lineare Zuordnung gewählt, bei der erfindungsgemäss eine Bedienung des zweiten Bedienelements proportional zu einer Veränderung des ausgewählten Parameters ist. Der Proportionalitätsfaktor ist dabei vorzugsweise durch den Benutzer veränderbar, so dass der Benutzer zwischen einer langsamen und einer schnellen Parameteränderung wählen kann. Hierzu ist vorzugsweise ein Bedienelement, beispielsweise eine Drucktaste, vorgesehen, durch deren Betätigung der Proportionalitätsfaktor für das Verhältnis zwischen der Betätigung der zweiten Bedieneinheit und der Veränderung des Parameters ausgewählt werden kann.

Es ist ferner vorteilhaft ein weiteres Bedienelement vorzusehen, mit dem die Parameteränderung mittels der zweiten Bedieneinheit deaktiviert werden kann. Dies ist insbesondere dann angebracht, wenn zudem durch das zweite Bedienelement eine sogenannte Scroll-Funktion eines Anzeigefensters oder zumindest eines Teilbereichs der Anzeigefläche gegeben werden soll. Da die zur Verfügung stehende Anzeigefläche möglicherweise nicht ausreichen wird, alle gewünschten Informationen zeitgleich darzustellen, kann es vorkommen, dass nicht alle auswählbaren Parameter in einem Anzeigefenster dargestellt werden können. Zum Verschieben des in dem Anzeigefenster sichtbaren Bereichs kann ebenfalls das zweite Bedienelement verwendet werden. Um eine Veränderung des Anzeigebereichs zu ermöglichen, ist dann gegebenenfalls eine Sperrtaste zu betätigen, die eine Parameterveränderung unabhängig von der Position der Anzeigemarke verhindert.

Insbesondere ist die Verwendung einer erfindungsgemäßen Eingabevorrichtung in einer Fahrerinformationsvorrichtung in einem Kraftfahrzeug vorteilhaft, da in dem Kraftfahrzeug im allgemeinen wenig Raum für umfangreiche Bedienelemente zur Verfügung steht. Zudem muss sich der Fahrer auf das Verkehrsgeschehen konzentrieren, so dass die Bedienung der Fahrerinformationsvorrichtung intuitiv und leicht zugänglich sein muss, wie es durch die erfindungsgemäße Eingabevorrichtung ermöglich wird.

### Zeichnung

Ausführungsbeispiele der Erfindung sind in der Zeichnung dargestellt und in der nachfolgenden Beschreibung näher erläutert. Es zeigen
Figur 1 eine erfindungsgemäße Eingabevorrichtung in der Verwendung in einer Fahrerinformationsvorrichtung in einem Kraftfahrzeug,
Figur 2a ein erstes Ausführungsbeispiel für ein zweites Bedienelement,
Figuren 2b, 2c weitere Ausführungsbeispiele für erfindungsgemäße zweite Bedienelemente,
Figur 3 ein Ausführungsbeispiel für eine erfindungsgemäße Ausgestaltung einer Anzeigenoberfläche,
Figur 4 ein Ausführungsbeispiel für ein Verfahren zum Betrieb einer erfindungsgemäßen Eingabevorrichtung.

### Beschreibung des Ausführungsbeispiels

Die erfindungsgemäße Eingabevorrichtung kann zur Bedienung beliebiger elektrischer Geräte verwendet werden, die mit einer Anzeige zur Steuerung des elektrischen Geräts verbunden sind. Das elektrische Gerät kann an die Eingabevorrichtung unmittelbar angeschlossen sein. Ferner kann auch über eine Fernsteuerung, z.B. über ein Datennetz, ein elektrisches Gerät mittels der erfindungsgemäßen Eingabevorrichtung gesteuert werden. Bei den einzustellenden Parametern kann es sich einerseits um direkte, unmittelbare physikalische Eigenschaften und Funktionen des elektrischen Geräts handeln, andererseits können auch Parameter für Programmfunktionen einer in dem elektrischen Gerät vorgesehenen Software mittels der erfindungsgemäßen Eingabevorrichtung verändert werden. Z.B. ist eine Verwendung einer erfindungsgemäßen Eingabevorrichtung in einem Computerprogramm zur Editierung mehrerer Parameter eines Programms des Gerätes oder von unmittelbaren Funktionen des Gerätes selbst möglich, z.B. auch an Steuerungen von Maschinen mit einem Computer, z.B. in der industriellen Fertigung. Im Folgenden wird die erfindungsgemäße Eingabevorrichtung am Beispiels einer Verwendung mit einer Fahrerinformationsvorrichtung in einem Kraftfahrzeug erläutert.

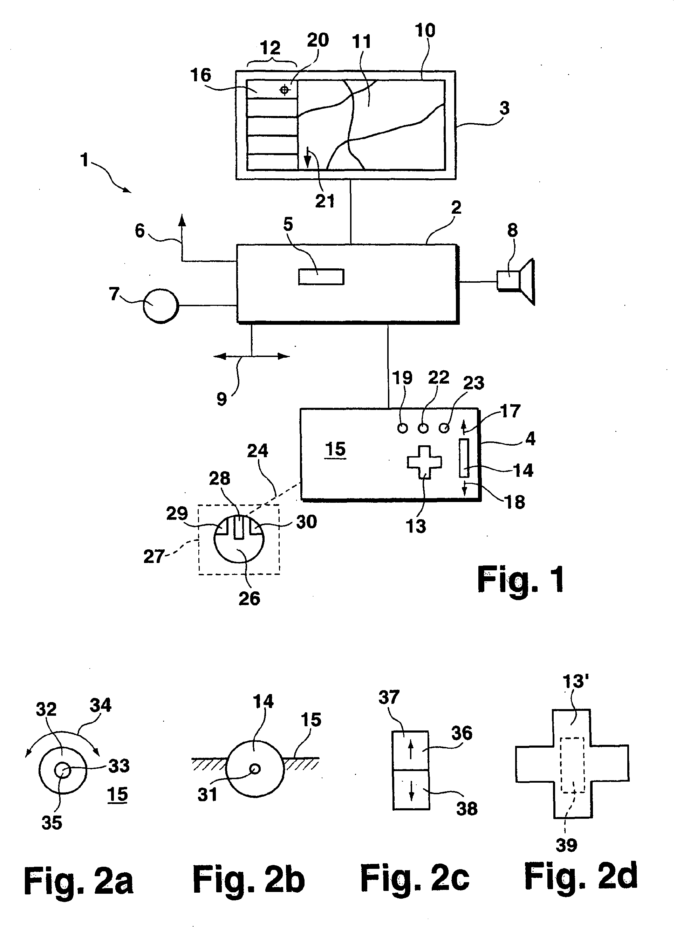

In der Figur 1 ist eine Fahrerinformationsvorrichtung 1 dargestellt, die über eine erfindungsgemäße Eingabevorrichtung verfügt. Die Fahrerinformationsvorrichtung 1 weist eine Steuereinheit 2 auf, an die eine Anzeigeeinheit 3 und eine Bedieneinheit 4 angeschlossen sind. Die Steuereinheit 2 verfügt über eine Recheneinheit 5, die die Anzeigeeinheit 3 steuert und Befehle von der Bedieneinheit 4 erfasst. Ferner werden von der Recheneinheit 5 auch die anderen Funktionalitäten der Fahrerinformationsvorrichtung gesteuert. Hierzu ist die Steuereinheit 2 mit einer Funkschnittstelle 6 zur Herstellung insbesondere einer Mobilfunkverbindung, mit einem Datenspeicher 7 zum Auslesen von Musik-, Navigations- oder Reiseinformationen und mit einer Lautsprechereinheit 8 zur Ausgabe eines Radioprogramms oder von akustischen Hinweisen verbunden. Ferner ist die Steuereinheit 2 vorzugsweise an einen Datenbus 9 angeschlossen, über den weitere Fahrzeugdaten, insbesondere von Fahrzeugsensoren, an die Steuereinheit 2 übermittelt werden. Die Fahrerinformationsvorrichtung 1 dient zur Bedienung von Fahrzeugfunktionen, so z.B. von einer Klimaregelung. Ferner weist die Fahrerinformationsvorrichtung 1 vorzugsweise eine Autoradiovorrichtung, eine Navigationsvorrichtung und/oder eine Telefoneinheit zur Herstellung einer Mobiltelefonverbindung auf. Ferner können insbesondere über den Datenbus 9 weitere Mediengeräten, z.B. eine Videovorrichtung, an die Steuereinheit 2 angeschlossen sein.

Die Anzeigeeinheit 3 ist vorzugsweise an einer für den Fahrer gut sichtbaren Stelle im Fahrzeug angeordnet, z.B. in der Mittelkonsole oder in einer Anzeigeeinrichtung vor dem Fahrer. Die Anzeigeeinheit 3 weist eine Anzeigefläche 10 auf, die z.B. als eine Flüssigkristallanzeige oder als eine Elektrolumineszenzanzeige ausgeführt ist. Vorzugsweise ist die Anzeige zur besseren Darstellung als eine Farbanzeige ausgeführt und insbesondere dazu geeignet, auch ein Fernsehbild oder ein Bild einer Videoanlage im Fahrzeug wiederzugeben. Bei dem in der Figur 1 dargestellten Ausführungsbeispiel ist in der Anzeigefläche 10 eine Landkartendarstellung 11 zur Fahrzeugnavigation in einem ersten Anzeigebereich dargestellt. Benachbart zu dem ersten Anzeigebereich sind Menüfelder zur Auswahl einzelner Funktionen oder Parameter neben der Landkartendarstellung 11 in die Anzeigenfläche 10 eingeblendet.

Eine Anzeigemarke 20 kann über die Anzeigefläche 10 bewegt werden. Zur Ansteuerung der Anzeigemarke 20 ist an der Bedieneinheit 4 eine Kreuzwippe 13 angeordnet, wobei durch die Betätigung der Kreuzwippe 13 die Anzeigemarke 20 sowohl in horizontaler, als auch in vertikaler Richtung über die Anzeigefläche 10 gesteuert werden kann. Neben der Kreuzwippe 13 ist ein Drehrad 14 als ein zweites Bedienelement angeordnet, dessen Seitenrand senkrecht aus einer Oberfläche 15 der Bedieneinheit 4 heraussteht. Wird mittels der Kreuzwippe 13 die Anzeigemarke 20 in einem der Auswahlfelder in dem zweiten Anzeigebereich 12 der Anzeigefläche 10 positioniert, kann der dem jeweiligen Auswahlfeld, in der Figur 1 das Feld 16, mittels der Anzeigemarke 20 zugeordnete Parameter - durch die Zuordnung automatisch nur dieser- durch eine Betätigung des Drehrades 14 in aufsteigende Richtung, was durch einen ersten Pfeil 17 angedeutet ist, oder in absteigender Richtung, was durch einen zweiten Pfeil 18 angedeutet ist, entsprechend verändert werden. Benachbart zu den Bedienelementen 13, 14 sind Drucktasten angeordnet, wobei eine erste Drucktaste 19 einer Deaktivierung der Parameterfunktion dient. Ist die erste Drucktaste 19 gedrückt, können in der Anzeigefläche 10 in dem zweiten Anzeigebereich 12 weitere Funktionalitäten der Fahrerinformationsvorrichtung 1 durch eine Verschiebung der in einem Fenster angezeigten Funktionalitäten dargestellt werden, deren Parameter anschließend erfindungsgemäß veränderbar sind. Auf die Anzeigemöglichkeit weiterer, veränderbarer Parameter wird in der Anzeigefläche 10 durch einen Hinweispfeil 21 hingewiesen.

Die zweite Drucktaste 22 dient dazu, eine Grobeinstellung von Funktionswerten vorzusehen. Durch eine Betätigung oder - je nach Ausführung - ein gedrückt Halten der zweiten Drucktaste 22 wird das Verhältnis zwischen einer Betätigung des Drehrades 14 und einer Parameteränderung derart verändert, dass eine Betätigung des Drehrades eine größere Parameteränderung bewirkt als bei einer nicht betätigten zweiten Drucktaste 22. So erfolgt bei einer geringen Betätigung des Drehrades 14 bereits eine schnelle Änderung des verstellbaren Parameters. Wird dagegen die dritte Drucktaste 23 betätigt, erfolgt eine besonders langsame Änderung des auszuwählenden Parameters, wenn das Drehrad 14 betätigt wird. Damit wird eine Feineinstellung des auswählbaren Wertes gewährleistet. Die Betätigung des Drehrades 14 ist dabei in einer bevorzugten Ausführungsform proportional zu einer Änderung des Parameterwertes, da eine proportionale Änderung durch einen Benutzer leicht erfassbar ist. Durch die zweite und dritte Drucktaste 22, 23 ist dabei der Proportionalitätsfaktor änderbar. Zur Änderung des Proportionalitätsfaktors können auch andere Bedienelemente, z.B. ein Drehregler, vorgesehen sein, der eine stufenlose Veränderung des Proportionalitätsfaktors ermöglicht oder auch ein axial zu bedienender Druckschalter, der mit Drehrad 14 eine bauliche Einheit bildet.

Die Ausführungen der Bedienelemente 13, 14 sind nicht auf die hier gewählten Ausführungsbeispiele beschränkt. In einer weiteren bevorzugten Ausführungsform wird die Kreuzwippe durch einen zweidimensionalen z.B. halbkugelförmiger Neigungsgeber ersetzt.Dieser kann anstelle an der Oberfläche 15 der Fahrerinformationsvorrichtung 1 z.B. auch an einem vorderen Ende einer Mittelkonsolenarmlehne eingebaut sein, wobei das Drehrad 14 in einen mittleren Bereich des halbkugelförmigen Neigungsgebers integriert wird. Anstelle der Kreuzwippe 13 kann auch ein Bedienhebel, ein sogenannter "Joystick", verwendet werden, durch dessen Auslenkung die Anzeigemarke in beliebige Richtungen über die Anzeigefläche 10 steuerbar ist. Ferner kann auch ein sogenanntes Touch-Panel vorgesehen sein, bei dem eine Bewegung des Fingers über das Touch-Panel die Anzeigemarke entsprechend der Fingerbewegung über die Anzeigefläche 10 bewegt. In einer weiteren Ausführungsform kann auch eine Oberfläche der Anzeigefläche 10 als ein erstes Bedienelement im erfindungsgemäßen Sinn dienen, sofern die Oberfläche berührungsempfindlich ausgeführt ist und eine Position eines Fingers eines Benutzers oder einen Druck auf die Oberfläche durch den Benutzer erkennen kann. Die Anzeigemarke 20 kann dann entsprechend der Benutzerberührung positioniert werden. In einer weiteren Ausführungsform kann z.B. über eine Funkverbindung 24 oder über eine in der Figur 1 nicht dargestellte drahtgebundene Verbindung ein externes Steuerelement 26, z.B. eine sogenannte Computermaus, mit der Bedieneinheit 4 verbunden werden. Das Steuerelement 26 wird über eine Oberfläche 27 bewegt, wobei eine Bewegung des Steuerelements 26 relativ zu der Oberfläche 27 optisch oder mechanisch detektiert wird. Ein Drehrad 28 ist an dem Steuerelement 26 angeordnet. Ferner können die Drucktasten 29, 30 zur Steuerung weiterer Funktionen an dem Steuerelement 26 vorgesehen sein. Über eine Bewegung des Steuerelementes 26 relativ zu der Oberfläche 27 wird die Anzeigemarke in der Anzeigefläche 10 verschoben. Mittels einer Bewegung des Drehrades 28 wird bei einer entsprechenden Positionierung der Anzeigemarke 20 in einem dem Parameter zugeordneten Feld der entsprechende Parameter verändert. Die getrennte Anordnung von der Bedieneinheit 4 ermöglicht es z.B. einem Beifahrer oder einem Passagier im Fond, ebenfalls die Fahrerinformationsvorrichtung zu beeinflussen.

Die Bedieneinheit 4 ist in einer bevorzugten Ausführungsform benachbart zu der Anzeigeeinrichtung in der Mittelkonsole angeordnet. Ferner kann die Bedieneinheit 4 auch in einem Lenkrad zur Steuerung des Fahrzeugs angeordnet sein. Gegebenenfalls sind auch mehrere verschiedene oder auch gleich ausgeführte Bedieneinheiten zur Steuerung der Fahrerinformationsvorrichtung 1 in dem Fahrzeug anbringbar. Gegebenenfalls kann die Bedieneinheit 4 auch über den Datenbus 9 mit der Steuereinheit 2 verbunden werden.

In der Figur 2b ist eine seitliche Ansicht des Drehrades 14 dargestellt, das an einer Achse 31 befestigt ist, die unterhalb der Oberfläche 15 der Bedieneinheit 4 liegt. Eine Drehung des Drehrades 14 ist vorzugsweise durch ebenfalls unterhalb der Oberfläche angeordnete Detektoren erfassbar. Die Achse ist vorzugsweise mit Rastvorrichtungen derart verbunden, dass eine Bewegung des Drehrades 14 eine haptische Rückwirkung an den Benutzer ergibt, so dass dieser einerseits bei der Drehung einen bestimmten Drehwiderstand jeweils entsprechend einem bestimmten Drehwinkel überwinden muss und andererseits eine haptische Rückmeldung über den überstrichenen Drehbereich erhält. Damit ist nach Auswahl des zu verstellenden Parameters nicht notwendigerweise einen Blickkontakt zu der Anzeigefläche 10 erforderlich, da der Benutzer bereits über die haptische Rückwirkung ein Feedback für seinen Benutzereingriff erhält.

In den Figuren 2a, 2c und 2d sind weitere Ausführungsbeispiele für zweite Bedienelemente dargestellt, durch die das Drehrad 14 ersetzt werden kann. In der Figur 2a ist ebenfalls ein Drehrad 32 dargestellt, dessen Drehachse 33 jedoch senkrecht zu der Oberfläche 15 der Bedieneinheit 4 verläuft. Eine Drehung ist in Pfeilrichtung 34 um die Drehachse möglich. Auch bei dem Drehrad 32 ist vorzugsweise eine elektrische Sensierung vorgesehen, die ein anschlagloses Drehen um die Drehachse 33 ermöglicht. In einer bevorzugten Ausführungsform kann das Drehrad 32 einen Mittelbereich 35 aufweisen, durch dessen Betätigung zusätzliche Funktionen, z.B. eine Bestätigung einer Auswahl, ein Wechseln des ausgewählten Parameters oder ein Ein- und Ausschalten der Fahrerinformationsvorrichtung ermöglicht wird.

In der Figur 2c ist eine Wipptaste 36 dargestellt, die einen ersten Bereich 37, der zur Erhöhung des jeweiligen, ausgewählten Parameterwertes dient, und einen zweiten Bereich 38 zur Verminderung des Parameterwertes aufweist.

In der Figur 2d ist ein weiteres Ausführungsbeispiel dargestellt, bei der in die Kreuzwippe 13' ein zweites Bedienelement 39 entweder in Form eines Drehrades entsprechend dem Drehrad 14 oder in Form einer weiteren Wippe entsprechend der Wipptaste 36 angeordnet ist. Durch die zentrale Anordnung innerhalb der Kreuzwippe 13 ist das zweite Bedienelement für den Benutzer leicht erfassbar und auffindbar.

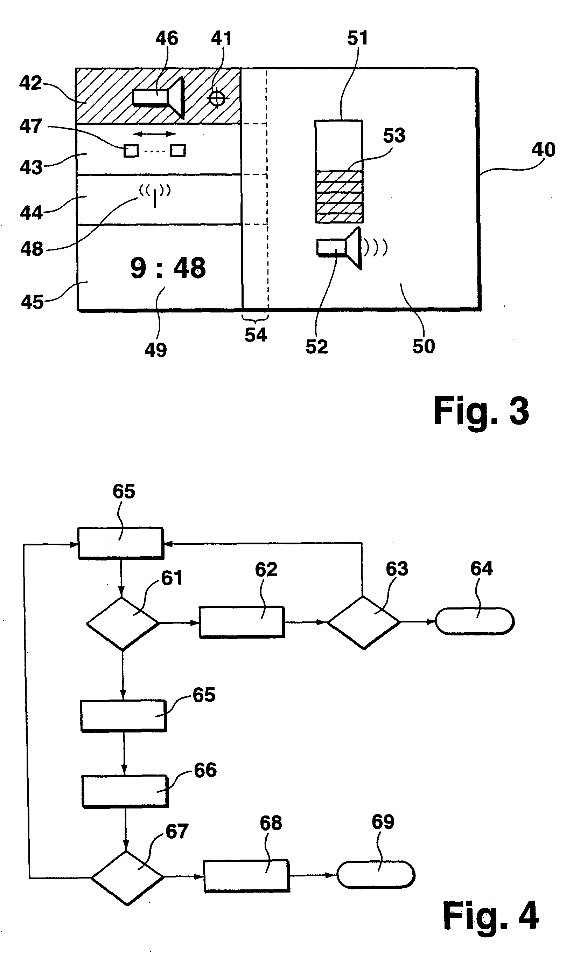

In der Figur 3 ist ein Ausführungsbeispiel für eine Anzeigenfläche 40 dargestellt. In der Anzeigenfläche 40 ist die Anzeigemarke 41 in einem ersten Auswahlfeld 42 positioniert.

Solange die Anzeigemarke 41 innerhalb des ersten Auswahlfeldes 42 positioniert ist, wird das erste Auswahlfeld 42, wie es durch die Schraffur angedeutet ist, mit einem farblich anderen Hintergrund als die übrigen Auswahlfelder 43, 44, 45 dargestellt. In dem ersten Auswahlfeld 42 ist ein Lautsprechersymbol 46 dargestellt, das auf eine Lautstärkenregelung hinweisen soll. In dem zweiten Auswahlfeld 43 ist ein Balance-Symbol 47 zur Einstellung der Lautstärkenverteilung zwischen den verschiedenen Stereolautsprechern eines in die Fahrerinformationsvorrichtung 1 integrierten Radios vorgesehen. In dem dritten Auswahlfeld 44 ist ein Sender-Symbol 48 dargestellt, das auf einen auswählbaren Sender hinweist. Bei einer Betätigung des Drehrades 14 bei einer Positionierung der Anzeigemarke 41 in dem dritten Auswahlfeld 44 wird entsprechend eine zu ändernde Frequenz angezeigt, die von einer der Fahrerinformationsvorrichtung 1 zugeordneten Radioeinheit empfangen wird. Über eine Betätigung des Drehrades 14 kann diese eingestellte Frequenz nunmehr verändert werden. In dem vierten Auswahlfeld 45 ist eine Uhrzeitanzeige 49 vorgesehen, die die aktuelle Zeit angibt. Bei dem hier gewählten Ausführungsbeispiel ist die Anzeigemarke 41 in dem Bereich des ersten Auswahlfeldes positioniert, wobei mit einer ersten Betätigung des zweiten Bedienelementes in einem zweiten Anzeigebereich 50 der Anzeigefläche 40, während die Anzeigemarke 41 sich in dem ersten Auswahlfeld 42 befindet, eine Skalenanzeige 51 für die gewählte Lautstärke in dem zweiten Anzeigebereich 50 dargestellt wird. Ergänzend wird ein Lautstärken-Symbol 52 dargestellt. Entsprechend einer Bewegung des zweiten Bedienelementes, z.B. einem Drehen des Drehrades 14 in Richtung des ersten Pfeils 17 oder einer Betätigung des ersten Bereiches 37 der Wipptaste 36, wird die Lautstärke erhöht und ein Anzeigepegel 53 innerhalb der Skalenanzeige 51, der die gewählte Lautstärke repräsentiert, wird in der Weise bewegt, dass die Skalenanzeige 51 weiter ausgefüllt wird, als in der Figur 3 dargestellt. Zugleich wird die Lautstärke von über die Lautsprechereinheit 8 ausgegebenen Audiosignalen erhöht. Bei einer Bewegung des zweiten Bedienelementes in die umgekehrte Richtung, z.B. bei einer Bewegung des Drehrades 14 in die Richtung des zweiten Pfeils 18 oder bei einer Betätigung des zweiten Bereichs 38 der Wipptaste 36 wird die Lautstärke vermindert und der Anzeigepegel 53 wird erniedrigt. Sobald die Anzeigemarke 41 das erste Auswahlfeld 42 verlassen hat, wird der so eingestellte Lautstärkenwert gespeichert und für die weitere akustische Ausgabe verwendet. Sobald sich die Anzeigemarke 41 in eines der anderen Auswahlfelder 43, 44, 45 bewegt, wird entsprechend dem jeweiligen Auswahlfeld entweder die Balance-Regelung, die Senderauswahl oder die Uhrzeit verändert. In einem Randbereich 54 der Auswahlfelder 42, 43, 44, der gestrichelt eingezeichnet ist, ist ein Fangbereich vorgesehen, wobei bei einer Positionierung der Auswahlmarke in einem jeweils abgetrennten, benachbarten Bereich zu dem jeweiligen Auswahlfeld bereits eine Zuordnung der Anzeigemarke zu dem jeweiligen, veränderbaren Parameter erfolgt. Wird also die Anzeigemarke in den Randbereich 54 bewegt und wird anschließend das zweite Bedienelement, z.B. das Drehrad 14, betätigt, so erfolgt bereits eine Veränderung des jeweils benachbarten Parameters, so dass der Randbereich 54 einen Fangbereich für eine Parameteränderung bildet. Insbesondere für die Uhrzeitänderung ist es vorteilhaft, zudem die zweite oder die dritte Drucktaste 22, 23 zu betätigen, um entweder einen schnellen Uhrzeitvorlauf oder einen langsamen Uhrzeitvorlauf zu wählen. Zur Sicherheit kann eine Betätigung der jeweiligen Taste vorgesehen sein, um ein versehentliches Ändern der Uhrzeit zu verhindern.

Eine Betätigung der zweiten und der dritten Drucktaste 22, 23 kann z.B. auch bei einer Auswahl eines Fahrziels aus einer Fahrzielliste vorteilhaft sein, die alphabetisch geordnet ist. Eine schnelle Auswahl kann zunächst zu dem Buchstabenbereich führen, mit dem das gewünschte Fahrziel anfängt. Eine Detailauswahl des Fahrziels kann anschließend entweder ohne Tastendruck oder gegebenenfalls verlangsamt mit einer entsprechenden Betätigung der zweiten Drucktaste 22 erfolgen. Zur Auswahl des Fahrziels ist ein entsprechendes Auswahlfeld in der Anzeigefläche 10 vorgesehen. Sobald sich die Anzeigenmarke über dem Auswahlfeld befindet, wird eine Liste mit allen möglichen Fahrzielen, z.B. beginnend mit dem Buchstaben A, in dem zweiten Anzeigebereich 50 dargestellt. Sobald die Anzeigemarke das Auswahlfeld verlässt, ist das jeweilige Fahrziel für die Navigationsvorrichtung gespeichert, wobei die Recheneinheit 5 einer Fahrtroute von der aktuellen Fahrzeugposition zu dem somit eingegebenen Fahrziel bestimmt.

In einem in der Zeichnung nicht dargestellten Ausführungsbeispiel kann auch eine Tastatur, wie sie z.B. für einen Personal Computer vorgesehen ist, an die Fahrerinformationsvorrichtung angeschlossen werden. Zur Steuerung der Anzeigemarke können hier Pfeiltasten der Tastatur verwendet werden. Ein erfindungsgemäßes zweites Bedienelement kann auch entsprechend an der Tastatur vorgesehen sein. Eine Steuerung kann jedoch auch über das Steuerelement 26 gemäß der Figur 1 erfolgen. Die Funktionen der weiteren Tasten 19, 22, 23 können durch besondere Tasten der PC-Tastatur, z.B. die Tasten "Control", "Shift" oder "Alt" gewährleistet werden. Hierbei ist es möglich, dass einem Proportionalitätsfaktor zwischen einer Betätigung des zweiten Bedienelementes und einer Änderung des Parameterwertes nicht nur von dem Drücken einzelner Tasten, sondern auch von einer Kombination der verschiedenen Tasten abhängen kann. In einer möglichen Ausführungsform beträgt ein hier einheitenloser Proportionalitätsfaktor A den Wert 10, wird die Shift-Taste gedrückt, wird der Proportionalitätsfaktor auf 1 geändert, wird stattdessen die Control-Taste gedrückt, erhält der Proportionalitätsfaktor den Wert 0,1. Wird sowohl die Shift-, als auch die Control-Taste gleichzeitig gedrückt, erniedrigt sich der Proportionalitätsfaktor auf 0,01.

Ferner ist es auch möglich, den Proportionalitätsfaktor für die Bedienung des Steuerelementes von der Bediengeschwindigkeit abhängig zu machen. Wird das zweite Bedienelement schnell betätigt, d.h. wird z.B. das Drehrad 14 in einer Zeiteinheit über einen bestimmten Winkel hinaus betätigt, so wird auch der zu beeinflussende Parameter schnell geändert. Bevorzugt wird dabei der Proportionalitätsfaktor umso größer eingestellt, je größer die Änderung der Position des Drehrades pro Zeiteinheit ist. Bei langsamen Bewegungen des Drehrades 14 wird dagegen auch der zu ändernde Parameter langsam geändert. Eine entsprechende Steuerungsvorschrift ist vorzugsweise in der Recheneinheit 5 abgelegt. Eine Änderung erfolgt also bevorzugt in der Weise, dass der Proportionalitätsfaktor, also eine Änderung des Parameterwertes pro Drehwinkel des Drehrades 14, mit zunehmender Drehgeschwindigkeit des Drehrades 14 ebenfalls zunimmt.

Je nach dem zu wählenden Parameter kann auch das Vorzeichen des Proportionalitätsfaktors negativ werden, d.h. bei einer Bewegung des Drehrades 14 in Richtung des ersten Pfeils 17 kann der zugeordnete Parameter auch erniedrigt werden, wobei die jeweilige Änderungsrichtung vorzugsweise aus der Anzeigefläche 10 ersichtlich ist.

In der Figur 4 ist ein Ausführungsbeispiel für ein Verfahren zum Betrieb einer erfindungsgemäßen Eingabevorrichtung dargestellt. Ausgehend von einem Erfassungsschritt 60, in dem eine Betätigung des zweiten Bedienelements, also z.B. des Drehrades 14, erfasst wird, wird zu einem ersten Prüfschritt 61 verzweigt. In dem ersten Prüfschritt wird geprüft, ob sich die Anzeigemarke 20 in einem Auswahlfeld bzw. in einem zugeordneten Fangbereich befindet, die einem veränderbaren Parameter zugeordnet sind. Ferner wird auch überprüft, ob nicht gegebenenfalls eine Parameterveränderung deaktiviert wurde. Ist dies der Fall, bzw. kann der Anzeigemarke 20 kein zu verändernder Parameter zugeordnet werden, so wird zu einem Scroll-Schritt 62 verzweigt, in dem gegebenenfalls die Bildschirmdarstellung verändert wird. In einem anschließenden zweiten Prüfschritt 63 wird überprüft, ob eine weitere Bedienung des zweiten Bedienelementes vorliegt. Ist dies der Fall, so wird zu dem Erfassungsschritt 60 zurückverzweigt, andernfalls wird das Verfahren in einem Endschritt 64 beendet. Wird in dem ersten Prüfschritt 61 dagegen ein zuordbarer Parameter festgestellt, so wird in einem Ermittlungsschritt 65 der Grad der Parameteränderung ermittelt und gegebenenfalls der Proportionalitätsfaktor zwischen einer Betätigung des zweiten Bedienelements und einer Parameteränderung ermittelt. In einem anschließenden Änderungsschritt 66 wird der Parameter entsprechend eingestellt und gegebenenfalls wird die Änderung in der Anzeigefläche 10 dargestellt. In einem anschließenden dritten Prüfschritt 67 wird überprüft, ob eine weitere Bedienung des zweiten Bedienelements vorliegt. Ist dies der Fall, so wird zu dem Erfassungsschritt 60 zurückverzweigt. Ist dies nicht der Fall, so wird zu einem nachfolgenden Speicherschritt 68 verzweigt, indem der nunmehr eingestellte Parameterwert in einer der Recheneinheit 5 zugeordneten Speichereinheit vorzugsweise nicht flüchtig abgelegt wird. Das Verfahren wird in einem nachfolgenden Endschritt 69 beendet und wird bei einer nachfolgenden, erneuten Betätigung des Drehrades 14 wieder aufgenommen.

## Patentansprüche

1. Eingabevorrichtung zur Steuerung eines elektrischen Geräts (1) mit einer ersten Bedieneinheit (13, 13', 26) zur Bewegung einer Anzeigemarke (20, 41) über eine Anzeigefläche (10, 40) und mit einer zweiten Bedieneinheit (14, 28, 32, 36, 39), wobei ein Teilbereich (16, 42, 43, 44, 45) der Anzeigefläche (10, 40) einem Parameter derart zugeordnet ist, dass, durch eine Bedienung der zweiten Bedieneinheit (14, 28, 32, 36, 39) der Parameter dann veränderbar ist wenn sich zur Zeit der Bedienung der zweiten Bedieneinheit (14, 28, 32, 36, 39) die Anzeigemarke (20, 41) in dem dem Parameter zugeordneten Teilbereich (16, 42, 43, 44, 45) der Anzeigefläche befindet, **dadurch gekennzeichnet, dass** ein Hinweis (46, 47, 48) auf den Parameter in der Anzeigefläche dargestellt ist und, dass der Parameter derart veränderbar ist, dass eine Bedienung der zweiten Bedieneinheit (14, 28, 32, 36, 39) proportional zu einer Veränderung des Parameters ist.

2. Eingabevorrichtung nach Anspruch 1, **dadurch gekennzeichnet, dass** die zweite Bedieneinheit (28, 39) in der ersten Bedieneinheit (13', 26) angeordnet ist.

3. Eingabevorrichtung nach einem der vorherigen Ansprüche, **dadurch gekennzeichnet, dass** die zweite Bedieneinheit (14, 32) ein Drehrad ist.

4. Eingabevorrichtung nach einem der vorherigen Ansprüche, **gekennzeichnet durch** einen Speicher (5) zum Speichern eines eingestellten Parameterwerts, nachdem die Anzeigemarke (20, 41) den dem Parameter zugeordneten Teilbereich der Anzeigefläche verlassen hat.

5. Eingabevorrichtung nach einem der vorhergehenden Ansprüche, **dadurch gekennzeichnet, dass** um den Teilbereich (42, 43, 44, 45) herum ein Fangbereich (54) vorgesehen ist, in dem ebenfalls die Position der Anzeigemarke (41) dem jeweiligen Parameter zugeordnet ist.

6. Eingabevorrichtung nach einem der vorherigen Ansprüche, **dadurch gekennzeichnet, dass** das Verhältnis zwischen einer Betätigung der zweiten Bedieneinheit (14, 28, 32, 36, 39) und einer Veränderung des Parameters anpassbar ist.

7. Eingabevorrichtung nach Anspruch 6, **gekennzeichnet durch** mindestens ein Bedienelement (22, 23), **durch** dessen Betätigung das Verhältnis zwischen der Betätigung der zweiten Bedieneinheit und der Veränderung des Parameters verändert wird.

8. Eingabevorrichtung nach einem der vorherigen Ansprüche **gekennzeichnet durch** ein Bedienelement (19) zur vorübergehenden Deaktivierung einer Parameterveränderung.

9. Verwendung einer Eingabevorrichtung nach einem der vorherigen Ansprüche in einer Fahrerinformationsvorrichtung in einem Kraftfahrzeug.

## Claims

1. Input apparatus for controlling an electrical device (1) with a first operating unit (13, 13', 26) for moving an indicator mark (20, 41) over a display area (10, 40) and with a second operating unit (14, 28, 32, 36, 39), a subregion (16, 42, 43, 44, 45) of the display area (10, 40) being assigned to a parameter in such a manner that the parameter can be changed, by operating the second operating unit (14, 28, 32, 36, 39), when the indicator mark (20, 41) is situated in that subregion (16, 42, 43, 44, 45) of the display area which is assigned to the parameter at the time when the second operating unit (14, 28, 32, 36, 39) is operated, **characterized in that** an indication (46, 47, 48) of the parameter is represented in the display area, and **in that** the parameter can be changed in such a manner that operation of the second operating unit (14, 28, 32, 36, 39) is proportional to a change in the parameter.

2. Input apparatus according to Claim 1, **characterized in that** the second operating unit (28, 39) is arranged in the first operating unit (13', 26).

3. Input apparatus according to one of the preceding claims, **characterized in that** the second operating unit (14, 32) is a thumbwheel.

4. Input apparatus according to one of the preceding claims, **characterized by** a memory (5) for storing a set parameter value after the indicator mark (20, 41) has left that subregion of the display area which is assigned to the parameter.

5. Input apparatus according to one of the preceding claims, **characterized in that** a capture region (54) in which the position of the indicator mark (41) is likewise assigned to the respective parameter is provided around the subregion (42, 43, 44, 45).

6. Input apparatus according to one of the preceding claims, **characterized in that** the relationship between operating the second operating unit (14, 28, 32, 36, 39) and changing the parameter can be adapted.

7. Input apparatus according to Claim 6, **characterized by** at least one operating element (22, 23), the operation of which is used to change the relationship between operating the second operating unit and changing the parameter.

8. Input apparatus according to one of the preceding claims, **characterized by** an operating element (19) for temporarily deactivating a parameter change.

9. Use of an input apparatus according to one of the preceding claims in a driver information apparatus in a motor vehicle.

## Revendications

1. Dispositif de saisie pour commander un appareil électrique 1 ayant une première unité de service 13, 13', 26 pour déplacer un index 20, 41 sur la surface d'affichage 10, 40 et une seconde unité de service 14, 28, 32, 36, 39,
une zone 16, 42, 43, 44, 45 de la surface d'affichage 10, 40 étant associée à un paramètre de façon que l'utilisation de la seconde unité de service 14, 28, 32, 36, 39 modifie le paramètre si au moment de l'utilisation de la seconde unité de service 14, 28, 32, 36, 39, le repère 20, 40 se trouve dans la zone 16, 42, 43, 44, 45 associée au paramètre,
**caractérisé en ce qu'**
une indication 46, 47, 48 est représentée sur le paramètre dans la surface d'affichage, et
le paramètre peut être modifié de façon qu'une utilisation de la seconde unité de service 14, 28, 32, 36, 39 soit proportionnelle à une variation du paramètre.

2. Dispositif de saisie selon la revendication 1,
**caractérisé en ce que**
la seconde unité de service 28, 39 est prévue dans la seconde unité de service 13', 26.

3. Dispositif de saisie selon l'une quelconque des revendications précédentes,
**caractérisé en ce que**
la seconde unité de saisie 14, 32 est une molette.

4. Dispositif de saisie selon l'une quelconque des revendications précédentes,
**caractérisé par**
une mémoire 5 pour enregistrer une valeur réglée du paramètre après que le repère d'affichage 20, 41 ait quitté la zone de la surface d'affichage associée au paramètre.

5. Dispositif de saisie selon l'une quelconque des revendications précédentes,
**caractérisé en ce que**
la zone 42, 43, 44, 45 est entouré d'une zone d'accrochage 54 dans laquelle la position du repère d'affichage 41 est associée au paramètre respectif.

6. Dispositif de saisie selon l'une quelconque des revendications précédentes,
**caractérisé en ce que**
le rapport entre l'actionnement de la seconde unité de service 14, 28, 32, 36, 39 et une variation du paramètre, est adaptable.

7. Dispositif de saisie selon la revendication 6,
**caractérisé par**
au moins un élément de service 22, 23 dont l'actionnement modifie le rapport entre l'actionnement de la seconde unité de service et la variation du paramètre.

8. Dispositif de saisie selon l'une quelconque des revendications précédentes,
**caractérisé par**
un élément de service 19 pour neutraliser provisoirement une variation de paramètre.

9. Application d'un dispositif de saisie selon l'une quelconque des revendications précédentes à un dispositif d'informations du conducteur dans un véhicule automobile.
